# EUROPÄISCHE PATENTANMELDUNG

(11) **EP 4 838 463 A1**
(43) Veröffentlichungstag der Anmeldung: **11.11.2026**
(21) Anmeldenummer: 26176947.5
(22) Anmeldetag: 06.05.2026
(51) Int. Cl.: G06T 7/11

(54) **ANNOTIEREN VON BILDERN**

(30) Priorität: 09.05.2025 DE 102025117845
(71) Anmelder: KUKA Deutschland GmbH, 86165 Augsburg (DE)
(72) Erfinder: SAFRONOV, Kirill, 86447 Aindling (DE)
(74) Vertreter: Dorow, Florian

(57) **Zusammenfassung**

Ein Annotieren von Bildern eines auf einer Ablage (30) angeordneten Objekts (40) umfasst: Ermitteln einer Ablagen-Referenzpose der Ablage relativ zu einem Roboterreferenzsystem (W) eines eine Kamera (20) führenden Roboters (10); Bereitstellen eines Referenzbildes, das auf einer Aufnahme der Ablage ohne das Objekt mithilfe der Kamera basiert, die durch den Roboter in einer Kamera-Referenzpose relativ zum Roboterreferenzsystem positioniert ist; Bereitstellen von Annotationsbildern, die auf Aufnahmen der Ablage mit darauf angeordnetem Objekt mithilfe der in unterschiedlichen Annotationsposen positionierten Kamera basieren; Ermitteln von perspektivisch verzerrten Ansichten der Ablage in den Annotationsbildern auf Basis des Referenzbildes, der Kamera-Referenzpose, der ermittelten Ablagen-Referenzpose und der Annotationsposen; Ermitteln von Eliminationsbildern auf Basis eines Eliminierens der Ansichten der Ablage in diesen Annotationsbildern; Ermitteln von das Objekt repräsentierenden Gebieten in den Annotationsbildern auf Basis der Eliminationsbilder; und Annotieren des Objekts in den Annotationsbildern auf Basis der Gebiete. Die Erfindung betrifft außerdem ein Verfahren zum Trainieren einer Datenverarbeitung, ein Verfahren zum Durchführen einer Roboterapplikation, ein System und ein Computerprogramm(produkt).

## Beschreibung

Die vorliegende Erfindung betrifft ein Verfahren zum Annotieren von Bildern wenigstens eines auf einer Ablage angeordneten Objekts, ein Verfahren zum Trainieren einer wenigstens teilweise auf maschinellem Lernen basierenden Datenverarbeitung auf Basis erfindungsgemäß an notierter Bilder bzw. ein Verfahren zum Durchführen einer Roboterapplikation mithilfe der trainierten Datenverarbeitung sowie ein System, Computerprogramm bzw. Computerprogrammprodukt zur Durchführung eines hier beschriebenen Verfahrens.

Zum Trainieren von wenigstens teilweise auf maschinellem Lernen basierenden Datenverarbeitungen zum Erkennen von Objekten in Bildern, insbesondere zum Durchführen von Roboterapplikationen, müssen vielen Bildern mit den Objekten zur Verfügung gestellt werden, in denen die Objekte annotiert sind.

Die DE 10 2022 110 871 A1 schlägt ein Verfahren vor, das umfasst: Erfassen von Daten, die einem Bild zugeordnet sind, das ein Objekt umfasst; Erlangen von Eingabedaten, die dem Objekt zugeordnet sind; Schätzen einer Vielzahl von Punkten innerhalb eines Frames des Bildes, wobei die Vielzahl von Punkten eine 3D-Begrenzung um das Objekt konstituiert; Transformieren der Vielzahl von Punkten in zwei oder mehr 2D-Punkte; Aufbauen eines Begrenzungsrahmens, der das Objekt umschließt, unter Verwendung der zwei oder mehr 2D-Punkte; Erzeugen einer Segmentierungsmaske des Objekts unter Verwendung morphologischer Techniken; und Durchführen von Annotation auf Grundlage der Segmentierungsmaske.

Eine Aufgabe einer Ausführung der vorliegenden Erfindung kann es sein, ein Annotieren von Bildern wenigstens eines auf einer Ablage angeordneten Objekts und/oder ein Trainieren einer wenigstens teilweise auf maschinellem Lernen basierenden Datenverarbeitung und/oder ein Durchführen einer Roboterapplikation zu verbessern.

Diese Aufgabe wird insbesondere durch ein Verfahren mit den Merkmalen des Anspruchs 1 bzw. 6 bzw. 7 gelöst. Ansprüche 8, 9 stellen ein System bzw. Computerprogramm bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung umfasst ein Verfahren zum, vorzugsweise teilweise oder vollständig automatisierten, Annotieren von Bildern wenigstens eines auf einer Ablage angeordneten Objekts die Schritte:
- Ermitteln einer Ablagen-Referenzpose der Ablage relativ zu einem Roboterreferenzsystem eines Roboters, der, in einer Weiterbildung an einem distalen bzw. Endflansch, eine Kamera führt;
- Bereitstellen wenigstens eines Referenzbildes, das auf einer Aufnahme der Ablage ohne das Objekt mithilfe der Kamera basiert, die durch den Roboter (beim Erstellen dieser Aufnahme) in einer Kamera-Referenzpose relativ zu dem Roboterreferenzsystem positioniert ist;
- Bereitstellen von verschiedenen Annotationsbildern, die auf Aufnahmen der Ablage mit dem darauf, vorzugsweise stets in der gleichen Pose, angeordneten Objekt basieren, wobei diese Aufnahmen mithilfe der Kamera gemacht worden sind, welche (beim Erstellen dieser Aufnahmen) durch den Roboter in unterschiedlichen Annotationsposen, vorzugsweise relativ zu dem Roboterreferenzsystem, positioniert (worden) sind;
   insbesondere also:
   - Bereitstellen eines ersten Annotationsbildes, das auf einer Aufnahme der Ablage mit dem darauf angeordneten Objekt basiert, die mithilfe der Kamera gemacht worden ist, welche (beim Erstellen dieser Aufnahme) durch den Roboter in einer ersten Annotationspose, vorzugsweise relativ zu dem Roboterreferenzsystem, positioniert (worden) ist; und
   - Bereitstellen eines oder mehrerer weiterer Annotationsbilder, wobei das bzw. jedes dieser weitere(n) Annotationsbilder (jeweils) auf einer weiteren Aufnahme der Ablage mit dem darauf angeordneten Objekt basiert, die mithilfe der Kamera gemacht worden ist, welche (beim Erstellen dieser Aufnahme) durch den Roboter in einer anderen Annotationspose, vorzugsweise relativ zu dem Roboterreferenzsystem, positioniert (worden) ist;
- Ermitteln von perspektivisch verzerrten Ansichten der Ablage in den verschiedenen Annotationsbildern bzw. jeweils einer perspektivisch verzerrten Ansicht der Ablage in dem jeweiligen Annotationsbild auf Basis
   - des Referenzbildes;
   - der Kamera-Referenzpose;
   - der ermittelten Ablagen-Referenzpose; und
   - der Annotationsposen bzw. der jeweiligen Annotationspose;
- Ermitteln von Eliminationsbildern auf Basis, vorzugsweise mithilfe, eines Eliminierens der ermittelten perspektivisch verzerrten Ansichten der Ablage in diesen Annotationsbildern bzw. der der jeweiligen ermittelten perspektivisch verzerrten Ansicht der Ablage in dem jeweiligen Annotationsbild;
- Ermitteln von Gebieten, die (jeweils) das Objekt repräsentieren, in den Annotationsbildern auf Basis der ermittelten Eliminationsbilder; und
- Annotieren des Objekts in den Annotationsbildern auf Basis der ermittelten Gebiete.

Ein Annotieren eines Objekts in einem Bild umfasst in einer Ausführung (entsprechend) eine Zuordnung des (bekannten) Objekts und eines erfindungsgemäß ermittelten, dieses Objekt repräsentierenden Gebietes in diesem Bild, ein Annotieren von Bildern eines Objekts ein entsprechendes Annotieren des Objekts in diesen Bildern.

Dem liegt insbesondere die Idee zugrunde, dass durch ein Eliminieren einer (Ansicht) einer Ablage, auf der ein Objekt während eines Erstellens einer Aufnahme angeordnet ist, ein, insbesondere wenigstens teilweise automatisiertes, Annotieren des Objekts signifikant verbessert, insbesondere rasch(er), einfach(er), schnell(er) und/oder präzise(r), durchgeführt werden kann, und dass ein solches Eliminieren für verschiedene Posen der Kamera relativ zum Objekt, die zum Annotieren bzw. Trainieren einer wenigstens teilweise auf maschinellem Lernen basierenden Datenverarbeitung besonders vorteilhaft sind, rasch(er), einfach(er), schnell(er) und/oder präzise(r) unter Verwendung einer Aufnahme der Ablage ohne das Objekt in einer bekannten Pose der Kamera relativ zur Ablage und perspektivisch verzerrter Ansichten der Ablage durchgeführt werden kann, die ihrerseits rasch(er), einfach(er), schnell(er) und/oder präzise(r) auf Basis dieser bekannten Pose der Kamera relativ zur Ablage und den verschiedenen Posen der Kamera relativ zum Objekt ermittelt werden kann. Anschaulich gesprochen ändert sich die Ansicht der Ablage bei einer Veränderung der Pose der robotergeführten Kamera relativ zur Ablage. Kennt man nun einerseits eine Ansicht der Ablage bei einer bestimmten (Kamera-Referenz)Pose und andererseits die jeweilige (Annotations)Pose, in der eine Aufnahmen von der Ablage mit dem darauf angeordneten Objekt gemacht worden ist, so kann aus dem Unterschied dieser Posen die (jeweilige) perspektivisch verzerrte Ansicht der Ablage ermittelt und in dem (jeweilige) Annotationsbild eliminiert werden.

Eine Pose im Sinne der vorliegenden Erfindung umfasst in einer Ausführung eine(n) ein-, zwei- oder dreidimensionale(n) Position bzw. Abstand zu einer Referenz, beispielsweise einem (Ursprung eines) Koordinatensystem(s), und/oder eine ein-, zwei- oder dreidimensionale Orientierung relativ zu der Referenz bzw. dem Koordinatensystem.

Ein Bild, das auf einer Aufnahme basiert, kann insbesondere die Aufnahme bzw. das von der Kamera gemachte Bild selber sein. Gleichermaßen kann ein Bild, das auf einer Aufnahme basiert, insbesondere eine mithilfe der Kamera gemachte Aufnahme sein, die anschließend durch eine Nachbearbeitung, insbesondere Bildbearbeitung, beispielsweise Filterung oder dergleichen, be- bzw. (weiter)verarbeitet worden ist.

Vorzugsweise zeigen die verschiedenen Annotationsbilder das Objekt von wenigstens drei, bevorzugt wenigstens vier, besonders bevorzugt wenigstens fünf, unterschiedlichen Seiten. Hierdurch kann insbesondere die Datenverarbeitung besser, insbesondere schnell(er), zuverlässig(er) und/oder robust(er), trainiert werden.

Vorzugsweise ist in der Kamera-Referenzpose die Kamera vertikal über der Ablage und/oder normal zu dieser bzw. derart positioniert, dass eine optische (Sicht- bzw. Haupt- bzw. Kamera)Achse der Kamera mit einer Oberflächennormalen einer Oberfläche der Ablage und/oder mit einer Normalen (auf) eine(r) Hauptebene der Ablage, die allgemein in einer vorteilhaften Ausführung eben ist, einen Winkel einschließt, der höchstens 15°, vorzugsweise höchstens 5°, beträgt. Mit anderen Worten steht in einer Ausführung die Kamera(achse) vorzugsweise wenigstens im Wesentlichen senkrecht zur, vorzugsweise ebenen, Ablage bzw. deren Oberfläche. Hierdurch kann ein(e) besonders vorteilhafte(s) Referenzbild bzw. -ansicht bereitgestellt bzw. die perspektivisch verzerrten Ansichten der Ablage einfach(er), schnell(er) und/oder präzise(r) ermittelt werden.

In einer Ausführung kann ein das Objekt repräsentierende Gebiet eine Maske des Objekts bzw. die Menge der Bildpunkte bzw. Pixel, die zu dem Objekt gehören, bzw. das Ermitteln von das Objekt repräsentierenden Gebieten ein Ermitteln von Masken bzw. Mengen der Bildpunkte bzw. Pixel, die (jeweils) zu dem Objekt gehören, umfassen, insbesondere sein. Durch solche Gebiete bzw. entsprechend annotierte Objekte bzw. Bilder können Objekte besonders präzise erkannt bzw. ermittelt werden.

In einer Ausführung kann ein das Objekt repräsentierende Gebiet ein(e), insbesondere zwei- oder dreidimensionale(r/-s), Bounding Box bzw. Begrenzungsrahmen oder -volumen des Objekts bzw. um das Objekt, bzw. das Ermitteln von das Objekt repräsentierenden Gebieten ein Ermitteln von solchen Bounding Boxen, umfassen, insbesondere sein. Durch solche Gebiete bzw. entsprechend annotierte Objekte bzw. Bilder können Objekte besonders schnell erkannt bzw. ermittelt werden.

In einer Ausführung umfasst das Ermitteln von Eliminationsbildern und/oder das Ermitteln von das Objekt repräsentierenden Gebieten ein Erodieren und/oder Dilatieren und/oder ein Kanten- und/oder Ecken- und/oder Konturerkennung und/oder wenigstens eine Filterung. Dadurch können die Objekte bzw. Bilder besonders präzise annotiert werden.

In einer Ausführung ist die Kamera eine 2D-Kamera. Ein erfindungsgemäßes Annotieren kann vorteilhafterweise auf, in der Regel teure(re), schwere(re), voluminöse(re) und/oder langsame(re), 3D-Kameras verzichten.

In einer Ausführung ist der Roboter ein Roboterarm, in einer Weiterbildung ein Knickarmroboter und/oder mit wenigstens drei, vorzugsweise wenigstens sechs, Gelenken bzw. (Bewegungs)Achsen. Dadurch kann die Kamera besonders vorteilhaft positioniert bzw. besonders vorteilhafte Annotationsposen angefahren werden.

In einer Ausführung umfasst das Ermitteln der Ablagen-Referenzpose:
- Bereitstellen wenigstens eines Kalibierbildes, das auf einer Aufnahme der Ablage mit einer oder mehreren optischen Marken, die vorzugsweise in einer (jeweils) bekannten, insbesondere vorgegebenen und/oder gemessenen, Pose relativ zur Ablage an dieser angeordnet sind, mithilfe der Kamera basiert, die durch den Roboter in einer Kamera-Kalibierpose relativ zu dem Roboterreferenzsystem positioniert ist; und
- Ermitteln der Ablagen-Referenzpose auf Basis der Kamera-Kalibierpose und der Ansicht der optischen Marke(n) in dem Kalibierbild.

Vorzugsweise ist das (zu annotierende) Objekt in dem Kalibierbild bzw. während des Erstellens der Aufnahme, auf der das Kalibierbild basiert, nicht auf der Ablage angeordnet. Zusätzlich oder alternativ sind in einer Ausführung die bzw. eine oder mehrere der optischen Marken in den Annotationsbildern bzw. während des Erstellens der Aufnahmen, auf denen diese basieren, nicht auf der Ablage angeordnet, werden in einer Weiterbildung nach dem Erstellen der Aufnahme, auf der das Kalibierbild basiert, von der Ablage entfernt.

Durch die Marke(n) ist bzw. kann eine Pose ***T***_{PK} der Ablage in einem Bild bzw. relativ zu( einem Referenzsystem de)r Kamera bestimmt (werden). Eine Pose ***T***_{KF} der Kamera und eines Glieds, vorzugsweise distalen bzw. Endflanschs, des Roboters, an dem die Kamera befestigt ist, relativ zueinander ist bzw. kann durch eine sogenannte Hand-Eye-Kalibrierung der Kamera bestimmt (werden). Eine solche Hand-Eye-Kalibrierung kann insbesondere ein Schritt bzw. Teil eines erfindungsgemäßen Verfahren sein. Eine Pose ***T***_{FW} dieses Roboterglieds und dem Roboterreferenzsystem relativ zueinander ist bzw. kann auf Basis der Gelenkstellungen und eines numerischen Kinematikmodells des Roboters bestimmt (werden). Dadurch kann die Pose ***T***_{PW} der Ablage relativ zu dem Roboterreferenzsystem bestimmt (werden), insbesondere auf Basis bzw. unter Berücksichtigung des Zusammenhangs: ***T***_{PW} = ***T***_{PK} ∘ ***T***_{KF} ∘ ***T***_{FW}. Mit dieser Pose ***T***_{PW} der Ablage und der jeweiligen Pose der Kamera relativ zu dem Roboterreferenzsystem kann dann auch die perspektivisch verzerrte Ansicht der Ablage in dem jeweiligen Annotationsbild ermittelt werden, welches auf der Aufnahme der Ablage mit dem Objekt mithilfe der durch den Roboter in der jeweiligen Annotationspose positionierten Kamera basiert.

Ein hier genanntes Roboterreferenzsystem kann insbesondere ein Referenzsystem, insbesondere Koordinatensystem, sein, dessen Position und Orientierung relativ zu einer (proximalen) Basis des Roboters bekannt und/oder konstant ist, insbesondere ein roboterfestes, vorzugsweise roboterbasisfestes, und/oder sogenanntes Weltkoordinatensystem.

Nach einer Ausführung der vorliegenden Erfindung umfasst ein Verfahren zum Trainieren einer wenigstens teilweise auf maschinellem Lernen basierenden Datenverarbeitung, beispielsweise eines künstlichen Neuronalen Netzes oder dergleichen, ein Annotieren von Bildern nach einem hier beschriebenen Verfahren und ein Trainieren der Datenverarbeitung auf Basis dieser annotierten Bilder, insbesondere derart bzw. mit der Maßgabe, dass die (trainierte) Datenverarbeitung das bzw. ein typgleiches Objekt in Bildern, die auf (neuen) Aufnahmen mit einer Kamera basieren, erkennt. Diese Kamera ist in einer Ausführung die(selbe) Kamera, die zum Annotieren von Bildern genutzt wurde, wodurch besonders vorteilhaft kameraspezifisch und damit besonders präzise trainiert werden kann. In einer anderen Ausführung basieren Bilder, die die (trainierte) Datenverarbeitung verarbeitet bzw. in denen sie das bzw. ein typgleiches Objekt erkennt, auf Aufnahmen mit einer neuen bzw. anderen Kamera, die nicht (auch) zum Annotieren von Bildern genutzt wurde, wodurch besonders vorteilhaft eine vortrainierte Datenverarbeitung zur Verfügung gestellt und dadurch insbesondere das Durchführen einer Roboterapplikation verbessert, insbesondere die Roboterapplikation schnell(er) und/oder präzise(r) durchgeführt, werden kann.

Nach einer Ausführung der vorliegenden Erfindung umfasst ein Verfahren zum Durchführen einer Roboterapplikation ein Trainieren einer wenigstens teilweise auf maschinellem Lernen basierenden Datenverarbeitung nach einem hier beschriebenen Verfahren und ein Durchführen der Roboterapplikation mithilfe der trainierten Datenverarbeitung, die in einer Weiterbildung bzw. zum Durchführen der Roboterapplikation Objekte in Kamerabildern erkennt und wenigstens einen Roboter basierend hierauf steuert, beispielsweise zum Handhaben, insbesondere Greifen und/oder Transportieren, der Objekte, Bearbeiten der Objekte oder dergleichen.

Hierdurch kann das Durchführen der Roboterapplikation verbessert, diese insbesondere schnell(er), prozesssicher(er) und/oder präzise(r) durchgeführt, werden.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:
- Mittel zum Ermitteln einer Ablagen-Referenzpose der Ablage relativ zu einem Roboterreferenzsystem eines Roboters, der eine Kamera führt;
- Mittel zum Bereitstellen wenigstens eines Referenzbildes, das auf einer Aufnahme der Ablage ohne das Objekt mithilfe der Kamera basiert, die durch den Roboter in einer Kamera-Referenzpose relativ zu dem Roboterreferenzsystem positioniert ist;
- Mittel zum Bereitstellen von verschiedenen Annotationsbildern, die auf Aufnahmen der Ablage mit dem darauf angeordneten Objekt mithilfe der durch den Roboter in unterschiedlichen Annotationsposen positionierten Kamera basieren;
- Mittel zum Ermitteln von perspektivisch verzerrten Ansichten der Ablage in den verschiedenen Annotationsbildern auf Basis des Referenzbildes, der Kamera-Referenzpose, der Ablagen-Referenzpose und der Annotationsposen;
- Mittel zum Ermitteln von Eliminationsbildern auf Basis eines Eliminierens der ermittelten perspektivisch verzerrten Ansichten der Ablage in diesen Annotationsbildern;
- Mittel zum Ermitteln von das Objekt repräsentierenden Gebieten in den Annotationsbildern auf Basis der ermittelten Eliminationsbilder; und
- Mittel zum Annotieren des Objekts in den Annotationsbildern auf Basis der ermittelten Gebiete.

In einer Ausführung weist das System bzw. seine Mittel auf:
- Mittel zum Erodieren und/oder Dilatieren und/oder zur Kanten- und/oder Ecken- und/oder Konturerkennung und/oder Filterung; und/oder
- Mittel zum Bereitstellen wenigstens eines Kalibierbildes, das auf einer Aufnahme der Ablage mit wenigstens einer optischen Marke mithilfe der Kamera basiert, die durch den Roboter in einer Kamera-Kalibierpose relativ zu dem Roboterreferenzsystem positioniert ist; und/oder
- Mittel zum Ermitteln der Ablagen-Referenzpose auf Basis der Kamera-Kalibierpose und der Ansicht der wenigstens einen optischen Marke in dem Kalibierbild; und/oder
- Mittel zum Trainieren einer wenigstens teilweise auf maschinellem Lernen basierenden Datenverarbeitung auf Basis der annotierten Bilder; und/oder
- Mittel zum Durchführen einer Roboterapplikation mithilfe der trainierten Datenverarbeitung.

Ein System und/oder Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule, insbesondere einen oder mehrere, vorzugsweise entsprechend programmierte, Computer, aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Bilder annotieren bzw. die wenigstens teilweise auf maschinellem Lernen basierende Datenverarbeitung trainieren bzw. die Roboterapplikation durchführen kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen eines Programms bzw. seiner Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das System bzw. seine Mittel.

Ein Bereitstellen von Bildern kann insbesondere ein Erstellen der Bilder und/oder ein Abrufen der Bilder aus einem Speicher und/oder Laden der Bilder in einen Speicher, insbesondere Arbeitsspeicher, umfassen, insbesondere sein.

In einer Ausführung weist das System (entsprechend) die Kamera(s) und/oder den bzw. die Roboter und/oder die Ablage und/oder das wenigstens eine (zu annotierende) Objekt auf.

Weitere Vorteile, Merkmale und vorteilhafte Weiterbildungen der vorliegenden Erfindung ergeben sich aus den Unteransprüchen und den Ausführungsbeispielen. Hierzu zeigt, teilweise schematisiert:
Fig. 1: ein System beim Durchführen eines Schrittes eines Verfahrens nach einer Ausführung der vorliegenden Erfindung;
Fig. 2: das System beim Durchführen eines weitere Schrittes des;
Fig. 3: das Verfahren; und
Fig. 4 ein Annotationsbild.

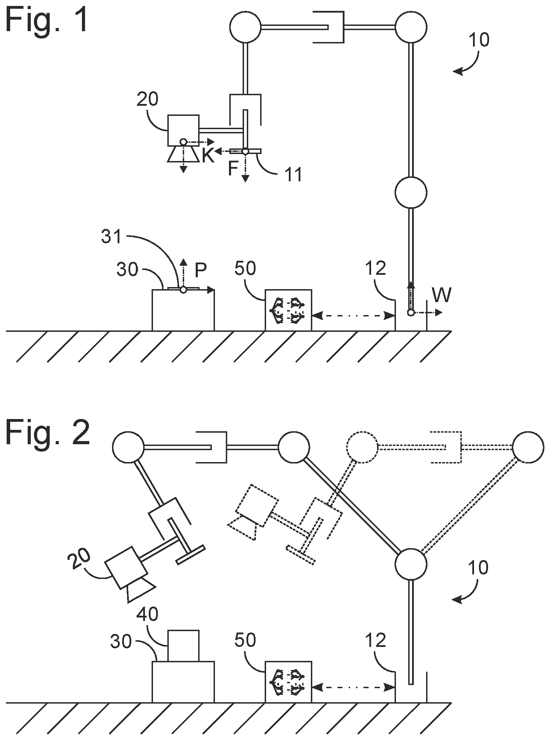

Fig. 1 zeigt ein System beim Durchführen eines Schrittes eines Verfahrens nach einer Ausführung der vorliegenden Erfindung mithilfe eines Roboters 10, der eine Kamera 20 führt, die (hierzu) an einem distalen bzw. Endflansch 11 des Roboters 10 befestigt ist, und einer Ablage 30.

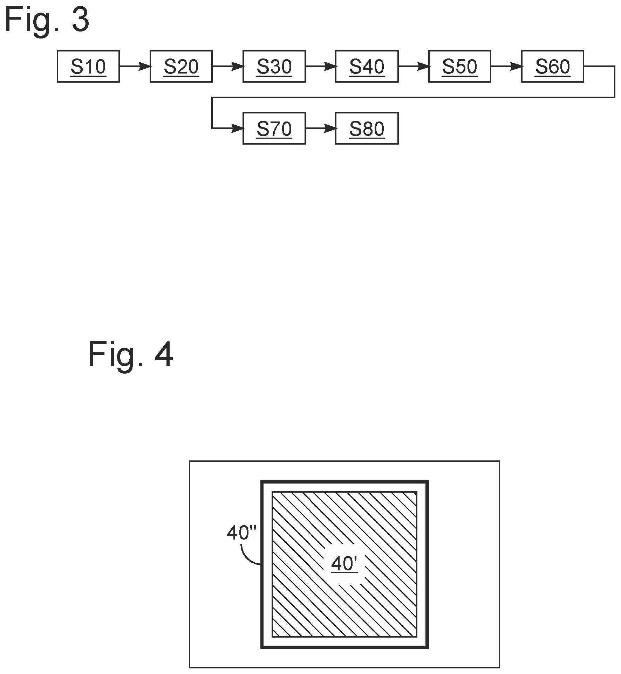

In einem Schritt S10 (vgl. Fig. 3) wird, gegebenenfalls nach Durchführen einer Hand-Eye-Kalibrierung der Kamera 20, durch die eine Pose ***T***_{KF} der Kamera 20 bzw. eines kamera(bild)festen Referenzsystems K relativ zum Roboterflansch 11 bzw. einem flanschfesten Referenzsystems F bestimmt worden ist, wobei eine solche Hand-Eye-Kalibrierung allgemein auch Teil eines erfindungsgemäßen Verfahrens sein kann, mit der Kamera 20, die durch den Roboter 10 in einer in Fig. 1 gezeigten Kamera-Kalibierpose relativ zu einem roboterbasisfesten Roboterreferenzsystem W positioniert ist, ein Kalibierbild (von) der Ablage 30 aufgenommen, auf der wenigstens eine optische Marke 31 angeordnet ist, beispielsweise an Schachbrettmuster mit einer ausgezeichneten Orientierung oder dergleichen.

In einem Schritt S20 (vgl. Fig. 3) wird auf Basis der Kamera-Kalibierpose ***T***_{KF} ∘ ***T***_{FW}, die durch die Pose der Kamera 20 relativ zur Basis 12 des Roboters 10 bzw. das Roboterreferenz- bzw. -koordinatensystem W bestimmt ist, und der Ansicht der wenigstens einen optischen Marke 31 in dem Kalibierbild eine Ablagen-Referenzpose ***T***_{PW} der Ablage 30 relativ zu dem Roboterreferenzsystem W ermittelt, beispielsweise gemäß ***T***_{PW} = ***T***_{PK} ∘ ***T***_{KF} ∘ ***T***_{FW}. Dabei wird ***T***_{FW} aus der Stellung des Roboters 10 bzw. seiner Gelenke bzw. Achsen, ***T***_{KF} aus der Hand-Eye-Kalibrierung und ***T***_{PK} aus der Ansicht der wenigstens einen optischen Marke 31 in dem Kalibierbild ermittelt. Die Verknüpfung ∘ kann beispielsweise die Multiplikation entsprechender Transformationsmatrizen angeben, also beispielsweise die Transformation vom Roboterreferenzsystem W in ein ablagefestes Koordinatensystem P der Transformation vom Roboterreferenzsystem W in das flanschfeste Referenzsystem F, von diesem in das kamera(bild)feste Referenzsystem K und von diesem in das ablagefeste Koordinatensystem P entsprechen.

In einer Ausführung nach Entfernen der wenigstens einen optischen Marke 31, wird in einem Schritt S30 ein Referenzbild von der Ablage 30 mithilfe der Kamera 20 aufgenommen, die durch den Roboter 10 in einer Kamera-Referenzpose relativ zu dem Roboterreferenzsystem W positioniert ist, wobei die Kamera-Referenzpose der in Fig. 1 gezeigten Roboterstellung entsprechen kann, bevorzugt vertikal von oben.

Nachdem ein zu annotierendes Objekt 40 auf der Ablage 30 angeordnet worden ist (vgl. Fig. 2), positioniert der Roboter 10 die Kamera 20 in verschiedene Annotationsposen, in denen jeweils ein Annotationsbild der Ablage 30 mit darauf angeordnetem Objekt 40 aufgenommen wird (Fig. 3: Schritt S40). Fig. 2 zeigt hierzu exemplarisch eine solche Annotationspose in ausgezogenem Strich und eine andere Annotationspose gestrichelt.

Für die jeweilige Roboterstellung bzw. Annotationspose wird auf Basis der Ansicht der Ablage 30 in dem Referenzbild bzw. der Kamera-Referenzpose jeweils die perspektivisch verzerrte Ansicht der Ablage 30 in dem jeweiligen Annotationsbild ermittelt und die perspektivisch verzerrten Ansichten der Ablage 30 in den Annotationsbildern in einem Schritt S50 eliminiert.

In den resultierenden Eliminationsbildern weisen die Pixel große Differenz in ihren RGB- oder Grauwerten auf, so dass Pixel, die zu dem Objekt 40 bzw. dessen Ansicht im jeweiligen Bild gehören, leicht, schnell, präzise und zuverlässig erkannt werden können. Basierend hierauf kann eine Maske oder Bounding Box des Objekts 40 in dem jeweiligen Annotationsbild ermittelt bzw. das Objekt 40 in den Annotationsbildern bzw. die Annotationsbilder annotiert werden (Fig. 3: Schritt S60).

Zur Verbesserung der Qualität kann in einem oder mehreren der vorstehend genannten bildbe- bzw. verarbeitenden Schritte (jeweils) ein Erodieren und/oder Dilatieren und/oder ein Kanten- und/oder Ecken- und/oder Konturerkennung und/oder eine Filterung durchgeführt werden.

In einem Schritt S70 wird dann eine wenigstens teilweise auf maschinellem Lernen basierende Datenverarbeitung 50 auf Basis der annotierten Bilder trainiert und in einem Schritt S80 der Roboter 10 oder in einer Abwandlung ein anderer Roboter durch die bzw. eine entsprechend trainierte Datenverarbeitung zum Durchführen einer Roboterapplikation gesteuert, beispielsweise einem robotergestützten Greifen von Gegenständen oder dergleichen.

Fig. 4 zeigt exemplarisch ein Annotationsbild mit einer Maske 40' und einer Bounding Box 40" des Objekts 40.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Roboter
- 11: Roboterflansch
- 12: Roboterbasis
- 20: Kamera
- 30: Ablage
- 31: Marker
- 40: Objekt
- 40': Maske
- 40": Bounding Box
- 50: Datenverarbeitung
- F: flanschfestes Koordinatensystem
- K: kamera(bild) festes Koordinatensystem
- P: ablagefestes Koordinatensystem
- W: Roboterreferenzsystem

## Patentansprüche

1. Verfahren zum Annotieren von Bildern wenigstens eines auf einer Ablage (30) angeordneten Objekts (40), mit den Schritten:
- Ermitteln einer Ablagen-Referenzpose der Ablage relativ zu einem Roboterreferenzsystem (W) eines Roboters (10), der eine Kamera (20) führt;
- Bereitstellen wenigstens eines Referenzbildes, das auf einer Aufnahme der Ablage ohne das Objekt mithilfe der Kamera basiert, die durch den Roboter in einer Kamera-Referenzpose relativ zu dem Roboterreferenzsystem positioniert ist;
- Bereitstellen von verschiedenen Annotationsbildern, die auf Aufnahmen der Ablage mit dem darauf angeordneten Objekt mithilfe der durch den Roboter in unterschiedlichen Annotationsposen positionierten Kamera basieren;
- Ermitteln von perspektivisch verzerrten Ansichten der Ablage in den verschiedenen Annotationsbildern auf Basis des Referenzbildes, der Kamera-Referenzpose, der ermittelten Ablagen-Referenzpose und der Annotationsposen;
- Ermitteln von Eliminationsbildern auf Basis eines Eliminierens der ermittelten perspektivisch verzerrten Ansichten der Ablage in diesen Annotationsbildern;
- Ermitteln von das Objekt repräsentierenden Gebieten in den Annotationsbildern auf Basis der ermittelten Eliminationsbilder; und
- Annotieren des Objekts in den Annotationsbildern auf Basis der ermittelten Gebiete.

2. Verfahren nach Anspruch 1, **dadurch gekennzeichnet, dass** das Ermitteln von das Objekt repräsentierenden Gebieten ein Ermitteln von Masken (40') und/oder Bounding Boxen (40") des Objekts umfasst.

3. Verfahren nach einem der vorhergehenden Ansprüche, **dadurch gekennzeichnet, dass** das Ermitteln von Eliminationsbildern und/oder das Objekt repräsentierenden Gebieten ein Erodieren und/oder Dilatieren und/oder ein Kanten- und/oder Ecken- und/oder Konturerkennung und/oder wenigstens eine Filterung umfasst.

4. Verfahren nach einem der vorhergehenden Ansprüche, **dadurch gekennzeichnet, dass** die Kamera eine 2D-Kamera und/oder der Roboter ein Roboterarm ist.

5. Verfahren nach einem der vorhergehenden Ansprüche, **dadurch gekennzeichnet, dass** das Ermitteln der Ablagen-Referenzpose umfasst:
- Bereitstellen wenigstens eines Kalibierbildes, das auf einer Aufnahme der Ablage mit wenigstens einer optischen Marke mithilfe der Kamera basiert, die durch den Roboter in einer Kamera-Kalibierpose relativ zu dem Roboterreferenzsystem positioniert ist; und
- Ermitteln der Ablagen-Referenzpose auf Basis der Kamera-Kalibierpose und der Ansicht der wenigstens einen optischen Marke in dem Kalibierbild.

6. Verfahren zum Trainieren einer wenigstens teilweise auf maschinellem Lernen basierenden Datenverarbeitung (50), mit den Schritten:
- Annotieren von Bildern nach einem Verfahren nach einem der vorhergehenden Ansprüche; und
- Trainieren (S70) der Datenverarbeitung auf Basis der annotierten Bilder.

7. Verfahren zum Durchführen einer Roboterapplikation, mit den Schritten:
- Trainieren (S70) einer wenigstens teilweise auf maschinellem Lernen basierenden Datenverarbeitung (50) nach einem Verfahren nach dem vorhergehenden Anspruch; und
- Durchführen (S80) der Roboterapplikation mithilfe der trainierten Datenverarbeitung.

8. System, das zur Durchführung eines Verfahrens nach einem der vorhergehenden Ansprüche eingerichtet ist und/oder aufweist:
- Mittel zum Ermitteln einer Ablagen-Referenzpose einer Ablage (30) relativ zu einem Roboterreferenzsystem (W) eines Roboters (10), der eine Kamera (20) führt;
- Mittel zum Bereitstellen wenigstens eines Referenzbildes, das auf einer Aufnahme der Ablage ohne das Objekt (40) mithilfe der Kamera basiert, die durch den Roboter in einer Kamera-Referenzpose relativ zu dem Roboterreferenzsystem positioniert ist;
- Mittel zum Bereitstellen von verschiedenen Annotationsbildern, die auf Aufnahmen der Ablage mit dem darauf angeordneten Objekt (40) mithilfe der durch den Roboter in unterschiedlichen Annotationsposen positionierten Kamera basieren;
- Mittel zum Ermitteln von perspektivisch verzerrten Ansichten der Ablage in den verschiedenen Annotationsbildern auf Basis des Referenzbildes, der Kamera-Referenzpose, der Ablagen-Referenzpose und der Annotationsposen;
- Mittel zum Ermitteln von Eliminationsbildern auf Basis eines Eliminierens der ermittelten perspektivisch verzerrten Ansichten der Ablage in diesen Annotationsbildern;
- Mittel zum Ermitteln von das Objekt repräsentierenden Gebieten in den Annotationsbildern auf Basis der ermittelten Eliminationsbilder; und
- Mittel zum Annotieren des Objekts in den Annotationsbildern auf Basis der ermittelten Gebiete.

9. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 8 den oder die Computer oder das System dazu veranlassen, ein Verfahren nach einem der Ansprüche 1 bis 7 durchzuführen.
